# EUROPEAN PATENT SPECIFICATION

(11) **EP 4 429 220 B1**
(45) Date of publication and mention of the grant of the patent: **11.11.2026**
(21) Application number: 23197036.9
(22) Date of filing: 13.09.2023
(51) Int. Cl.: H04N 1/00, H04N 1/12, H04N 1/193, H04N 1/203

(54) **IMAGE READING DEVICE**
BILDLESEVORRICHTUNG
DISPOSITIF DE LECTURE D'IMAGE

(30) Priority: 07.03.2023 JP 2023034661; 07.03.2023 JP 2023034662
(43) Date of publication of application: 11.09.2024
(73) Proprietor: Fujifilm Business Innovation Corp., Tokyo 107-0052 (JP)
(72) Inventor: SHIMONAGA, Akio, Yokohama, 220-8668 (JP)
(74) Representative: Meissner Bolte Partnerschaft mbB

(56) References cited:
- EP-A1- 3 883 228
- JP-A- 2003 051 915
- US-A- 5 903 365
- US-B2- 8 792 145

## Description

### Background

### (i) Technical Field

The present disclosure relates to an image reading device.

### (ii) Related Art

Japanese Unexamined Patent Application Publication No. 2003-51915 discloses an image reading device including a document guide path that guides a document that is transported, a fixed reader that reads the document that passes through the document guide path, and a transport roller pair that is positioned on an upstream side of the document guide path in a document transport direction and that sends the document to the fixed reader.

Japanese Unexamined Patent Application Publication No. 2010-4414 discloses a structure in which a cleaning member that includes a body part and a brush part is rotatably provided above and apart from a document-passage-surface side of a platen glass.

Japanese Unexamined Patent Application Publication No. 2010-4415 discloses a structure in which a plate-shaped member that contacts a brush part is, in a rotation direction of a cleaning member, provided on a downstream side of a region where a platen glass and the brush part contact each other.

US 5,903,365, EP 3 883 228 and US 8,792,145 each present further prior art according to the preamble of claim 1.

### Summary

In an image reading device that reads an image on a recording medium, it is possible to use, for example, a structure in which a recording medium passes between a rotary body and image reading means disposed at a position where the image reading means faces the rotary body.

Here, when a gap between the rotary body and the image reading means is large and when a recording medium passes between the rotary body and the image reading means, the movement of the recording medium becomes unstable and thus the quality of image reading using the image reading means may be reduced.

Accordingly, it is a first object of the present disclosure to, when a recording medium passes between a rotary body and image reading means disposed at a position where the image reading means faces the rotary body, improve the quality of image reading using the image reading means compared to that when the recording medium is guided by only the rotary body and the image reading means.

In an image reading device that reads an image on a recording medium, it is possible to use, for example, a structure in which a recording medium passes between a rotary body and image reading means disposed at a position where the image reading means faces the rotary body. In addition, in the image reading device, it is possible to use a structure in which a protruding portion that protrudes from an outer peripheral surface of the rotary body is provided at the rotary body.

Here, when the rotary body is to rotate and when an end portion of the protruding portion is positioned on a downstream side of its base portion in a rotation direction of the rotary body, the protruding portion tends to be caught by a member disposed around the rotary body. In this case, the protruding portion may be damaged.

Accordingly, it is a second object of the present disclosure to, when the rotary body is to rotate, make it unlikely for the protruding portion that protrudes from the outer peripheral surface of the rotary body to be damaged compared to when the end portion of the protruding portion that protrudes from the outer peripheral surface of the rotary body is positioned on the downstream side of its base portion in the rotation direction of the rotary body.

The invention is described in claim 1. According to a first aspect of the present disclosure as given in claim 1, there is provided an image reading device including transporting means for transporting a recording medium along a transport path; image reading means, disposed on one side of the transport path, for reading an image formed on the recording medium that is transported through the transport path; and a rotary body that is rotatably provided, that is disposed on a side opposite to a side where the image reading means is set with the transport path being interposed between the rotary body and the image reading means, and that includes an elastic body that protrudes toward the image reading means. When the image is to be read by the image reading means, one planar surface provided as part of an outer peripheral surface of the rotary body faces the image reading means, and, when the one planar surface is in a state of facing the image reading means, the elastic body protrudes toward the image reading means and the elastic body is brought into a state of being positioned in a gap between the one planar surface and the image reading means.

According to a second aspect of the present disclosure, , in the image reading device according to the first aspect, an outer peripheral surface of the rotary body has a plurality of planar surfaces whose positions in a peripheral direction of the rotary body differ from each other, and the elastic body is attached to one planar surface of the plurality of planar surfaces.

According to a third aspect of the present disclosure, in the image reading device according to the second aspect, the elastic body has a plate shape, and, with one surface of the elastic body and the one planar surface of the rotary body being in surface-contact with each other, the elastic body is attached to the one planar surface.

According to a sixth aspect of the present disclosure, in the image reading device according to the first aspect,.

According to a fourth aspect of the present disclosure, in the image reading device according to the first aspect, when the rotary body rotates and the one planar surface is brought into a state of not facing the image reading means, the elastic body is brought into a state of being positioned at a location where the elastic body is displaced from the gap.

According to an fifth aspect of the present disclosure, in the image reading device according to the first aspect, the image reading means has a guide surface that is disposed at a position where the guide surface faces the rotary body, that extends along a movement direction of the recording medium that is transported, and that guides the recording medium, and the elastic body is disposed in a state of being inclined with respect to the guide surface.

According to a sixth aspect of the present disclosure, in the image reading device according to the first aspect, the image reading device is configured to rotate the rotary body in a first direction and wherein a cleaning member that cleans a to-be-cleaned location of the image reading means is provided at the outer peripheral surface of the rotary body, and, when the to-be-cleaned location is to be cleaned by the cleaning member, the rotary body rotates in a second direction opposite to the first direction.

According to a seventh aspect of the present disclosure, in the image reading device according to the sixth aspect, a rotation angle of the rotary body when the rotary body rotates in the second direction is less than 360 degrees.

According to a eighth aspect of the present disclosure, in the image reading device according to the sixth aspect, when the to-be-cleaned location is to be cleaned by the cleaning member, the image reading device is configured to rotate the rotary body in the second direction such that the cleaning member passes the to-be-cleaned location, and, when the rotary body rotates in the second direction, the image reading device is configured such that the rotary body finishes rotating in the second direction before the elastic body reaches a position where the elastic body faces the to-be-cleaned location.

According to a ninth aspect of the present disclosure, in the image reading device according to the eighth aspect, when the rotary body rotates in the second direction and the cleaning member passes the to-be-cleaned location, the cleaning member moves downstream in a direction of transport of the recording medium by the transporting means.

According to the first aspect of the present disclosure, when a recording medium passes between the rotary body and the image reading means disposed at a position where the image reading means faces the rotary body, it is possible to improve the quality of image reading using the image reading means compared to that when the recording medium is guided by only the rotary body and the image reading means.

According to the second aspect of the present disclosure, compared to a structure in which the elastic body is attached to a curved surface, it is possible to more stably support the elastic body.

According to the third aspect of the present disclosure, compared to a structure in which the elastic body is attached to a curved surface, it is possible to more stably support the elastic body.

According to the first aspect of the present disclosure, by using the elastic body, it is possible to guide the recording medium that passes through the gap between the one planar surface and the image reading means.

According to the fourth aspect of the present disclosure, it is possible to position the elastic body at the location where the elastic body is displaced from the gap between the rotary body and the image reading means.

According to the fifth aspect of the present disclosure, compared to when the elastic body is disposed in an orthogonal state with respect to the guide surface, it is possible to more smoothly move the recording medium when the recording medium passes the elastic body.

According to the sixth aspect of the present disclosure, when the to-be-cleaned location is to be cleaned by the cleaning member, the rotary body can rotate in the opposite direction.

According to the seventh aspect of the present disclosure, when the rotary body rotates in the opposite direction, it is possible to prevent the protruding portion from passing the position where the protruding portion faces the image reading means.

According to the eighth aspect of the present disclosure, when the rotary body rotates in the opposite direction, it is possible to prevent the protruding portion from passing the position where the protruding portion faces the to-be-cleaned location.

According to the ninth aspect of the present disclosure, compared to when the cleaning member moves upstream in the direction of transport of the recording medium by the transporting means, it is possible to reduce soiling of the to-be-cleaned location.

### Brief Description of the Drawings

An exemplary embodiment of the present disclosure will be described in detail based on the following figures, wherein:
Fig. 1 illustrates an entire structure of an image forming system;
Fig. 2 illustrates an example of a hardware configuration of a controller;
Fig. 3 is an explanatory view of an image forming apparatus;
Fig. 4 is a vertical sectional view of an inspection device at a location where an upper rotary body is set;
Fig. 5 is an enlarged view of the upper rotary body and a light transmitting part;
Fig. 6 illustrates a state when, for example, the upper rotary body is seen from obliquely below the upper rotary body;
Fig. 7 illustrates a case when the upper rotary body is seen from below the upper rotary body and from a direction indicated by arrow VII in Fig. 5;
Fig. 8 illustrates a range of reading of an image by a lower image reading part;
Fig. 9 illustrates a modification of an elastic body; and
Figs. 10A to 10D are each an explanatory view of a rotation of the upper rotary body.

### Detailed Description

An exemplary embodiment of the disclosure is described below with reference to the drawings.

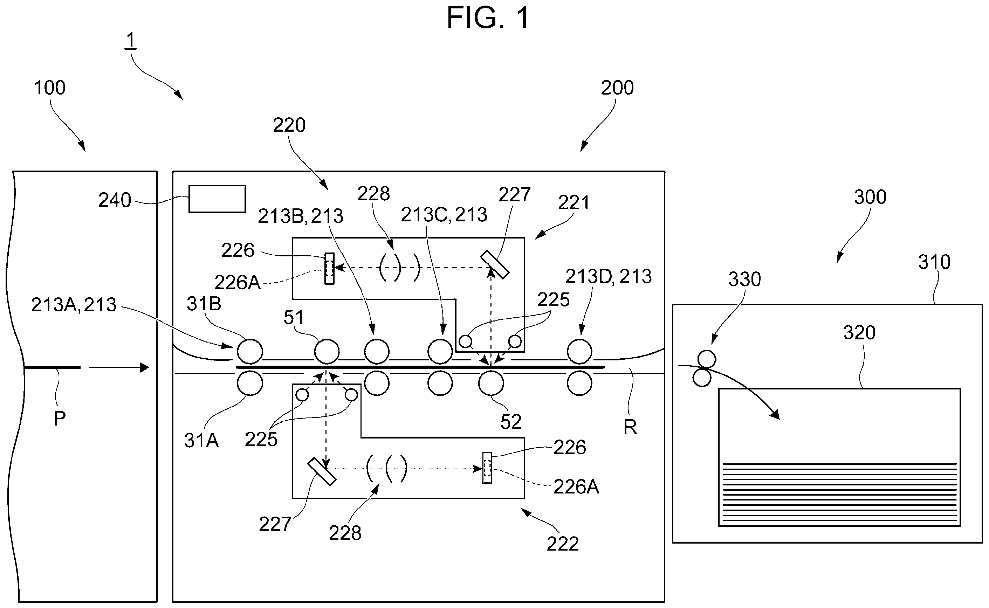

Fig. 1 illustrates an entire structure of an image forming system 1.

The image forming system 1 of the exemplary embodiment includes an image forming apparatus 100 that forms an image on a sheet P, which is an example of a recording medium, an inspection device 200 that inspects the image formed on the sheet P by the image forming apparatus 100, and a sheet accommodating device 300 that accommodates the sheet P discharged from the inspection device 200.

The image forming system 1 has the function of inspecting an image formed on a sheet P, and can be regarded as an image inspection system.

The inspection device 200 has the function of transporting a sheet P, which is an example of a recording medium, and can be regarded as a recording medium transporting device. In addition, the inspection device 200 has the function of reading an image formed on a sheet P, and can be regarded as an image reading device.

The image forming apparatus 100 that functions as image forming means obtains image data, which becomes the source of an image to be formed, from, for example a PC (Personal Computer) that is not shown.

On the basis of the obtained image data and by using a material, such as toner, the image forming apparatus 100 forms an image on a sheet P, which is an example of a recording medium.

Note that the mechanism that forms an image on a sheet P is not particularly limited. An image is formed on a sheet P by using, for example, an electrophotographic system or an inkjet system.

The inspection device 200 has a sheet transport path R, which is an example of a transport path through which a sheet P discharged from the image forming apparatus 100 is transported.

The inspection device 200 is provided with multiple transport rollers 213, which are examples of transporting means that transport a sheet P along the sheet transport path R. In the exemplary embodiment, a sheet P is transported downstream by the multiple transport rollers 213.

In the exemplary embodiment, as the transport rollers 213, an upstream transport roller 213A disposed on the most upstream side in a transport direction of a sheet P is provided. A downstream transport roller 213D is provided on the most downstream side in the transport direction of a sheet P.

Further, a first intermediate transport roller 213B and a second intermediate transport roller 213C disposed on a downstream side of the first intermediate transport roller 213B are provided between the upstream transport roller 213A and the downstream transport roller 213D.

Each transport roller 213 includes a driving roller 31A that performs rotational driving and a driven roller 31B that is pushed against the driving roller 31A and that rotates by being subjected to a driving force from the driving roller 31A.

At a contact portion where the driving roller 31A and the driven roller 31B contact each other, the driven roller 31B is subjected to the driving force from the driving roller 31A. As the driving roller 31A rotates, the driven roller 31B is subjected to the driving force from the driving roller 31A and rotates.

The inspection device 200 includes an image reading part 220 that reads an image formed on a sheet P.

In the exemplary embodiment, as the image reading part 220, an upper image reading part 221 and a lower image reading part 222, which are examples of image reading means, are provided.

The upper image reading part 221 is disposed above the sheet transport path R. The upper image reading part 221 reads an image formed on an upper surface, which is an example of one of two surfaces of a sheet P.

The lower image reading part 222 is disposed below the sheet transport path R. The lower image reading part 222 reads an image formed on a lower surface, which is an example of the other of the two surfaces of a sheet P.

Further, the inspection device 200 is provided with a controller 240. The controller 240 controls each portion of the inspection device 200.

The upper image reading part 221 and the lower image reading part 222 each include light sources 225 that illuminate a sheet P with light, a light-receiving part 226 that receives reflected light from the sheet P, and a light-reflecting member 227 that reflects the reflected light from the sheet P and directs the reflected light toward the light-receiving part 226.

The light-receiving part 226 includes multiple light-receiving elements 226A constituted by, for example, photodiodes, and the reflected light from the sheet P is received by the multiple light-receiving elements 226A.

The multiple light-receiving elements 226A are disposed side by side in one direction. Specifically, the multiple light-receiving elements 226A are disposed side by side in a direction orthogonal to the plane of Fig. 1.

In other words, the multiple light-receiving elements 226A are disposed side by side in a direction orthogonal to the transport direction of a sheet P and orthogonal to a thickness direction of the sheet P that is transported in the inspection device 200.

The upper image reading part 221 and the lower image reading part 222 each include an image-focusing optical system 228, such as a lens, that focuses on the light-receiving part 226 the reflected light coming from the light-reflecting member 227.

In the exemplary embodiment, the upper image reading part 221 and the lower image reading part 222 are each an image reading part including a reducing optical system.

In the exemplary embodiment, a rotatable upper rotary body 51 is provided on a side opposite to a side where the lower image reading part 222 is set with the sheet transport path R being interposed therebetween. A rotatable lower rotary body 52 is provided on a side opposite to a side where the upper image reading part 221 is set with the sheet transport path R being interposed therebetween.

Further, in the exemplary embodiment, a driving motor (not shown), which is a driving source for rotating the upper rotary body 51, and a driving motor (not shown), which is a driving source for rotating the lower rotary body 52, are provided.

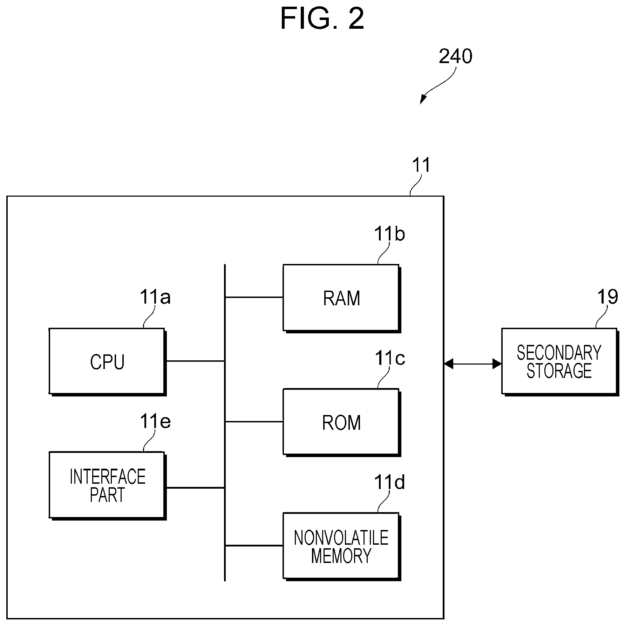

Fig. 2 illustrates an example of a hardware configuration of the controller 240. The controller 240 is realized by a computer.

The controller 240 includes an arithmetic processing part 11 that performs digital arithmetic processing in accordance with a program, and a secondary storage 19 that stores information.

The secondary storage 19 is realized by an existing information storage device, such as an HDD (Hard Disk Drive), a semiconductor memory, or a magnetic tape.

The arithmetic processing part 11 includes a CPU 11a, which is an example of a processor.

In addition, the arithmetic processing part 11 includes RAM 11b that is used as, for example, a working memory of the CPU 11a, and ROM 11c that stores, for example, a program that is executed by the CPU 11a.

The arithmetic processing part 11 also includes a nonvolatile memory 11d that is configured to be rewritable and that is capable of holding data when electric power supply is stopped, and an interface part 11e that controls each portion, such as a communication part, that is connected to the arithmetic processing part 11.

The nonvolatile memory 11d is constituted by, for example, a flash memory or SRAM backed up by a battery. The secondary storage 19 stores various types of information, such as a program that is executed by the arithmetic processing part 11.

In the exemplary embodiment, a processing operation is performed by the inspection device 200 as a result of the arithmetic processing part 11 reading a program stored in the ROM 11c or the secondary storage 19.

With a program that is executed by the CPU 11a being stored in a computer readable recording medium, such as a magnetic recording medium (a magnetic tape, a magnetic disc, or the like), an optical recording medium (such as an optical disc), a magneto-optical recording medium, or a semiconductor memory, the program can be provided to the inspection device 200. The program that is executed by the CPU 11a may be provided to the inspection device 200 by using communication means, such as the internet.

In the present description, the term "processor" refers to a processor in the wide sense, and encompasses a general-purpose processor (for example, a CPU (Central Processing Unit)), and a special-purpose processor (such as a GPU (Graphics Processing Unit), an ASIC (Application Specific Integrated Circuit), an FPGA (Field Programmable Gate Array), and a programmable logical device)).

A processor operation may be performed not only by one processor but also by multiple processors in cooperation, the multiple processors being physically disposed apart from each other. The order of each operation of the processor or the processors is not limited to only the order described in the exemplary embodiment and may be changed.

The image forming system 1 is further described with reference to Fig. 1.

The sheet accommodating device 300 includes a housing 310. The sheet accommodating device 300 also includes a sheet stacking part 320.

The sheet stacking part 320 is set inside the housing 310, and, in the exemplary embodiment, sheets P that are successively discharged from the inspection device 200 are stacked in the sheet stacking part 320.

Further, the sheet accommodating device 300 includes send-out rollers 330 that send out to the sheet stacking part 320 sheets P that are discharged from the inspection device 200.

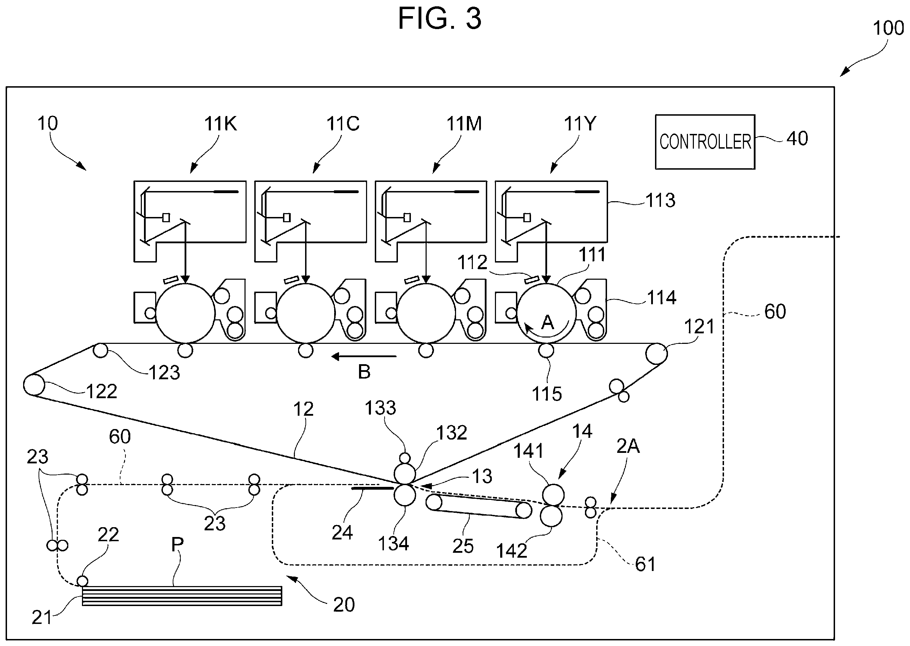

Fig. 3 is an explanatory view of the image forming apparatus 100.

Note that Fig. 3 shows an example of the image forming apparatus 100, and the apparatus structure of the image forming apparatus 100 is not limited to that shown in Fig. 3. Although the image forming apparatus 100 shown in Fig. 3 is an apparatus that forms an image by using a so-called electrophotographic system, the image forming apparatus 100 may be, for example, an apparatus that forms an image by using an inkjet system.

The image forming apparatus 100 may be an apparatus that forms an image by using a system other than an electrophotographic system or an inkjet system.

The image forming apparatus 100 includes an image forming part 10, a sheet transporting part 20, and a controller 40.

The image forming part 10 includes image forming units 11 (11Y, 11M, 11C, and 11K), an intermediate transfer belt 12, a second-transfer part 13, and a fixing device 14.

In the exemplary embodiment, as the image forming units 11, four image forming units 11Y, 11M, 11C, and 11K corresponding to toners of respective four colors, that is, Y (yellow), M (magenta), C (cyan), and K (black), are provided.

The four image forming units 11Y, 11M, 11C, and 11K are disposed side by side in a movement direction of the intermediate transfer belt 12, and form toner images by using an electrophotographic system.

The four image forming units 11Y, 11M, 11C, and 11K each include a photoconductor drum 111, a charging part 112, an exposure part 113, a developing part 114, and a first-transfer part 115.

The four image forming units 11Y, 11M, 11C, and 11K each form a toner image of a corresponding one of Y, M, C, and K, and transfer the formed toner image to the intermediate transfer belt 12. Therefore, a toner image formed by superimposing the toner images of the respective colors, Y, M, C, and K is formed on the intermediate transfer belt 12.

Each photoconductor drum 111 rotates in the direction of arrow A in the figure with a predetermined speed. Each charging part 112 charges the peripheral surface of the corresponding photoconductor drum 111 to a predetermined potential. Each exposure part 113 illuminates the peripheral surface of the corresponding charged photoconductor drum 111 with light, and forms an electrostatic latent image on the peripheral surface of the corresponding photoconductor drum 111.

Each developing part 114 adheres toner to the electrostatic latent image formed on the peripheral surface of the corresponding photoconductor drum 111 to form a toner image. Each first-transfer part 115 transfers the toner image formed on the peripheral surface of the corresponding photoconductor drum 111 to the intermediate transfer belt 12.

A voltage having a polarity opposite to a toner charge polarity is applied to each first-transfer part 115. Therefore, each toner image formed on the peripheral surface of the corresponding photoconductor drum 111 is successively electrostatically attracted to the intermediate transfer belt 12. As a result, a color toner image formed by superimposing the toner images into one toner image is formed on the intermediate transfer belt 12.

The intermediate transfer belt 12 is supported by multiple roller-shaped members. The intermediate transfer belt 12 is a belt-shaped member that circulates and moves in the direction of arrow B in the figure.

In the exemplary embodiment, as the roller-shaped members, a driving roller 121 that is driven by a motor (not shown) and that drives the intermediate transfer belt 12, a tension roller 122 that applies a tension to the intermediate transfer belt 12, an idle roller 123 that supports the intermediate transfer belt 12, and a backup roller 132 are provided.

The sheet transporting part 20 includes a sheet accommodating part 21 that accommodates multiple sheets P in a stacked state, and a pickup roller 22 that takes out and transports the sheets P accommodated in the sheet accommodating part 21.

The sheet transporting part 20 also includes transport rollers 23 that transport along a sheet transport path 60 the sheets P taken out by the pickup roller 22, and a guide part 24 that guides to the second-transfer part 13 the sheets P that have been transported by the transport rollers 23.

The sheet transporting part 20 includes a transport belt 25 that transports the sheets P that have been subjected to second-transfer to the fixing device 14.

The second-transfer part 13 includes a second-transfer roller 134 that is disposed in contact with an outer surface of the intermediate transfer belt 12, and a backup roller 132 that is disposed on an inner side of the intermediate transfer belt 12 and that is a facing electrode with respect to the second-transfer roller 134.

In the exemplary embodiment, a metal feed roller 133 that applies a second-transfer bias to the backup roller 132 is provided.

At the second-transfer part 13, a toner image formed on the intermediate transfer belt 12 is transferred to a sheet P that has been transported.

The fixing device 14 is disposed on a downstream side of the second-transfer part 13 in the transport direction of a sheet P. The fixing device 14 includes a fixing roller 141 that has a heating source (not shown) and a pressure roller 142 that is provided so as to face the fixing roller 141 and that presses the fixing roller.

In the exemplary embodiment, a sheet P transported to the second-transfer part 13 is transported to a location between the fixing roller 141 and the pressure roller 142, and an unfixed toner image on the sheet P is fused and fixed to the sheet P. Therefore, an image formed from the toner image is formed on the sheet P.

The image forming apparatus 100 of the exemplary embodiment is capable of forming images on both surfaces of a sheet P, and includes a reverse transport path 61 that is used in forming images on both surfaces of a sheet P.

The reverse transport path 61 is provided on a downstream side of the fixing device 14 so as to branch off from the sheet transport path 60. When a connection portion 2A, where the reverse transport path 61 and the sheet transport path 60 are connected to each other, is a starting point, the reverse transport path 61 extends leftward in the figure, and merges with the sheet transport path 60 on an upstream side of the second-transfer part 13.

When images are to be formed on both surfaces of a sheet P, a sheet P on whose one surface an image has been formed is temporarily transported up to a location on a downstream side of the connection portion 2A. Then, the transport direction of the sheet P is reversed, and, with an end portion that has been positioned as a trailing end portion of the sheet P in the transport direction thereof being a leading end, the sheet P is send to the reverse transport path 61.

Then, the sheet P is resupplied to the second-transport path 13 through the reverse transport path 61.

Therefore, at the second-transfer part 13, a toner image is transferred to the other surface of the sheet P. Thereafter, the sheet P moves toward the fixing device 14, and, at the fixing device 14, the toner image is fixed to the sheet P. This processing operation forms the images on both surfaces of the sheet P.

Note that the mode of forming images on both surfaces of a sheet P is not limited. For example, it is possible to provide image forming parts in correspondence with the one surface and the other surface of the sheet P, and use the image forming parts for the respective surfaces of the sheet P to form images on both of the surfaces of the sheet P.

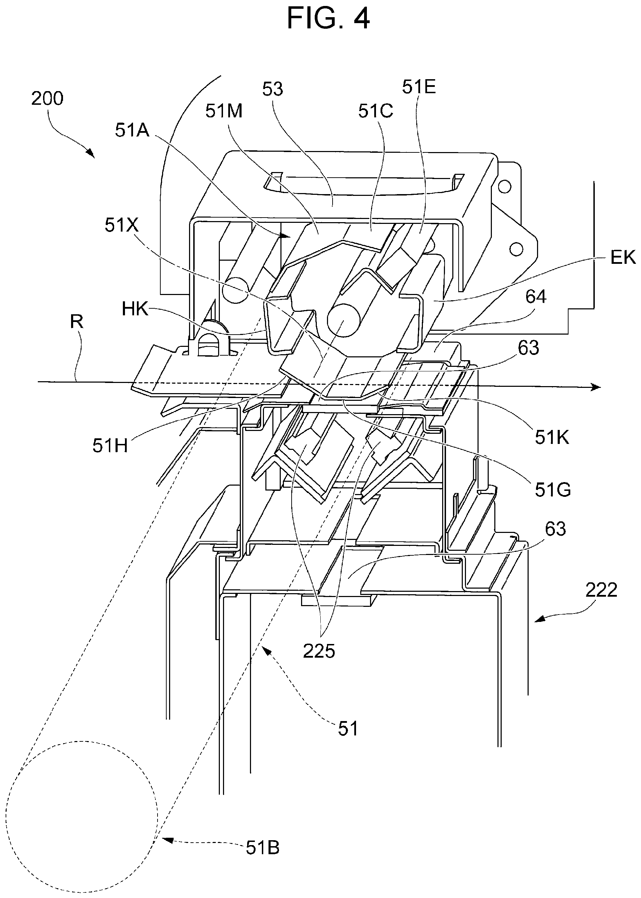

Fig. 4 is a vertical sectional view of the inspection device 200 at a location where the upper rotary body 51 is set.

More specifically, Fig. 4 is a cross-sectional view of the inspection device 200 in a plane that is orthogonal to an axial direction of the upper rotary body 51 and that passes through a near side of one end portion 51A of the upper rotary body 51.

In the exemplary embodiment, the upper rotary body 51, which is an example of a rotary body, has the one end portion 51A and another end portion 51B whose positions differ from each other in the axial direction. Fig. 4 shows a state of a cross section of the inspection device 200 in a vertical plane that is positioned on the near side of the one end portion 51A.

Note that, although, in the description below, the upper rotary body 51 and the lower image reading part 222 are described, the lower rotary body 52 (see Fig. 1) and the upper image reading part 221 also have structures that are the same as those of the upper rotary body 51 and the lower image reading part 222.

In the exemplary embodiment, the lower image reading part 222, which is an example of image reading means, is disposed on a lower side, which is one side, of the sheet transport path R. The lower image reading part 222 reads an image formed on one of the surfaces of a sheet P that is transported through the sheet transport path R.

The lower image reading part 222 includes a light transmitting part 63 that is disposed on the lower side, which is one side, of the sheet transport path R, and through which reflected light from the sheet P passes. The light transmitting part 63 is a plate-shaped member. The light transmitting part 63 is made of, for example, glass. Note that, for the light transmitting part 63, materials other than glass may be used as long as the materials are capable of passing light therethrough.

Further, the lower image reading part 222 includes a disposition member 64 disposed around the light transmitting part 63. In the exemplary embodiment, the light transmitting part 63 is supported by the disposition member 64.

In the exemplary embodiment, the upper rotary body 51 is disposed on a side opposite to a side where the lower image reading part 222 is set with the sheet transport path R being interposed therebetween. The upper rotary body 51 is provided in a rotatable state.

The upper rotary body 51 has a polygonal shape, and an outer peripheral surface of the upper rotary body 51 has multiple planar surfaces 51C disposed side by side in a peripheral direction of the upper rotary body 51.

The multiple planar surfaces 51C are disposed such that their positions in the peripheral direction of the upper rotary body 51 differ from each other. The multiple planar surfaces 51C are each disposed so as to face an outer direction in a radial direction of the upper rotary body 51. In other words, the multiple planar surfaces 51C are disposed so as to face a side opposite to a side where a rotational axis 51X of the upper rotary body 51 is positioned.

In the exemplary embodiment, a white reference plate HK that is white, which is an example of a calibration member, is provided with respect to a planar surface 51C of the multiple planar surfaces 51C. In addition, in the exemplary embodiment, a color calibration plate EK, which is another example of a calibration member, is provided with respect to another planar surface 51C.

The white reference plate HK and the color calibration plate EK are long, and are provided along the axial direction of the upper rotary body 51. For example, multiple color patches having different colors are disposed on the color calibration plate EK so as to be disposed side by side in the axial direction of the upper rotary body 51.

In the exemplary embodiment, when a sheet P is not being transported, the white reference plate HK or the color calibration plate EK is caused to face the lower image reading part 222. The reading of the white reference plate HK and the color calibration plate EK is performed by the lower image reading part 222.

Then, in the exemplary embodiment, the lower image reading part 222 performs calibration on the basis of the result of the reading by the lower image reading part 222.

Specifically, on the basis of the result of the reading, for example, a correction parameter that is used in correcting image data obtained by the reading by the lower image reading part 222 is generated, or a reading condition when the lower image reading part 222 reads an image is changed.

Further, in the exemplary embodiment, a cleaning member 51E is provided at another planar surface 51C of the upper rotary body 51. The cleaning member 51E cleans the lower image reading part 222.

More specifically, the cleaning member 51E moves in contact with the light transmitting part 63, which is an example of a to-be-cleaned part, and cleans the light transmitting part 63.

The shape and the material of the cleaning member 51E are not particularly limited. The cleaning member 51E is made of, for example, a nonwoven fabric or an elastic porous material.

Further, in the exemplary embodiment, the upper rotary body 51 has a reading guide surface 51G.

In the exemplary embodiment, when the lower image reading part 222 is to read an image on a sheet P, the reading guide surface 51G is positioned on an upper side of the sheet transport path R and guides the sheet P through the sheet transport path R.

The reading guide surface 51G is provided as part of the outer peripheral surface of the upper rotary body 51. The reading guide surface 51G is constituted by one planar surface 51C provided at an outer surface of the upper rotary body 51.

In the exemplary embodiment, when the lower image reading part 222 is to read an image on a sheet P, the reading guide surface 51G is disposed in a state of facing the lower image reading part 222. More specifically, the reading guide surface 51G is disposed in a state of facing the light transmitting part 63.

When the lower image reading part 222 is to read an image on a sheet P, the reading guide surface 51G is disposed in a state parallel to the light transmitting part 63.

In the exemplary embodiment, when the lower image reading part 222 is to read an image on a sheet P, the sheet P passes between the reading guide surface 51G and the light transmitting part 63.

Here, the sheet P is guided by the reading guide surface 51G and the light transmitting part 63. Further, in the exemplary embodiment, when the sheet P passes between the reading guide surface 51G and the light transmitting part 63, the lower image reading part 222 reads an image formed on the sheet P.

In the exemplary embodiment, the upper rotary body 51 has an upstream guide surface 51H and a downstream guide surface 51K. The upstream guide surface 51H and the downstream guide surface 51K are also each constituted by a planar surface 51C of the upper rotary body 51.

When the reading guide surface 51G is in the state of facing the light transmitting part 63, the upstream guide surface 51H is positioned on an upstream side of the reading guide surface 51G in the transport direction of a sheet P.

When the reading guide surface 51G is in the state of facing the light transmitting part 63, the upstream guide surface 51H is disposed in a state of being inclined with respect to the transport direction of a sheet P.

When the reading guide surface 51G is in the state of facing the light transmitting part 63, the upstream guide surface 51H is disposed so as to be gradually situated closer to the light transmitting part 63 as the upstream guide surface 51H extends downstream in the transport direction of a sheet P.

When the reading guide surface 51G is in the state of facing the light transmitting part 63, the downstream guide surface 51K is positioned on a downstream side of the reading guide surface 51G in the transport direction of a sheet P.

When the reading guide surface 51G is in the state of facing the light transmitting part 63, the downstream guide surface 51K is disposed in a state of being inclined with respect to the transport direction of a sheet P.

When the reading guide surface 51G is in the state of facing the light transmitting part 63, the downstream guide surface 51K is disposed so as to be gradually situated further away from the light transmitting part 63 as the downstream guide surface 51K extends downstream in the transport direction of a sheet P.

Note that, in the exemplary embodiment, the reading guide surface 51G, the upstream guide surface 51H, and the downstream guide surface 51K are formed by bending one metal plate. Therefore, in the exemplary embodiment, the reading guide surface 51G, the upstream guide surface 51H, and the downstream guide surface 51K are integrated with each other.

Although described below, the upper rotary body 51 of the exemplary embodiment includes elastic bodies (not shown in Fig. 4) that protrude toward the lower image reading part 222.

Further, in the exemplary embodiment, a transport guide surface 51M is constituted by another planar surface 51C of the upper rotary body 51.

In the exemplary embodiment, when a sheet P is caused to pass between the light transmitting part 63 and the upper rotary body 51 without reading of an image by the lower image reading part 222, the transport guide surface 51M is disposed in a state of facing the light transmitting part 63.

In the exemplary embodiment, a separation distance between the transport guide surface 51M and the light transmitting part 63 when the transport guide surface 51M is in the state of facing the light transmitting part 63 is larger than a separation distance between the reading guide surface 51G and the light transmitting part 63 when the reading guide surface 51G is in the state of facing the light transmitting part 63.

As the planar surfaces 51C, the upper rotary body 51 has at least two planar surfaces 51C whose distances from the rotational axis 51X of the upper rotary body 51 differ from each other. Specifically, as the two planar surfaces 51C, the transport guide surface 51M and the reading guide surface 51G are provided.

In the exemplary embodiment, as described above, the separation distance between the transport guide surface 51M and the light transmitting part 63 when the transport guide surface 51M is in the state of facing the light transmitting part 63 is larger than the separation distance between the reading guide surface 51G and the light transmitting part 63 when the reading guide surface 51G is in the state of facing the light transmitting part 63.

Further, in the exemplary embodiment, a retracting part 53 that is capable of retracting from the sheet transport path R is provided. The retracting part 53 is provided on the upper side of the sheet transport path R. The retracting part 53 is movable upward. The retracting part 53 is provided so as to extend in the axial direction of the upper rotary body 51.

In the exemplary embodiment, the one end portion 51A and the other end portion 51B of the upper rotary body 51 in the axial direction thereof are supported by the retracting part 53. In the exemplary embodiment, when the retracting part 53 moves upward, the upper rotary body 51 moves in a direction away from the lower image reading part 222.

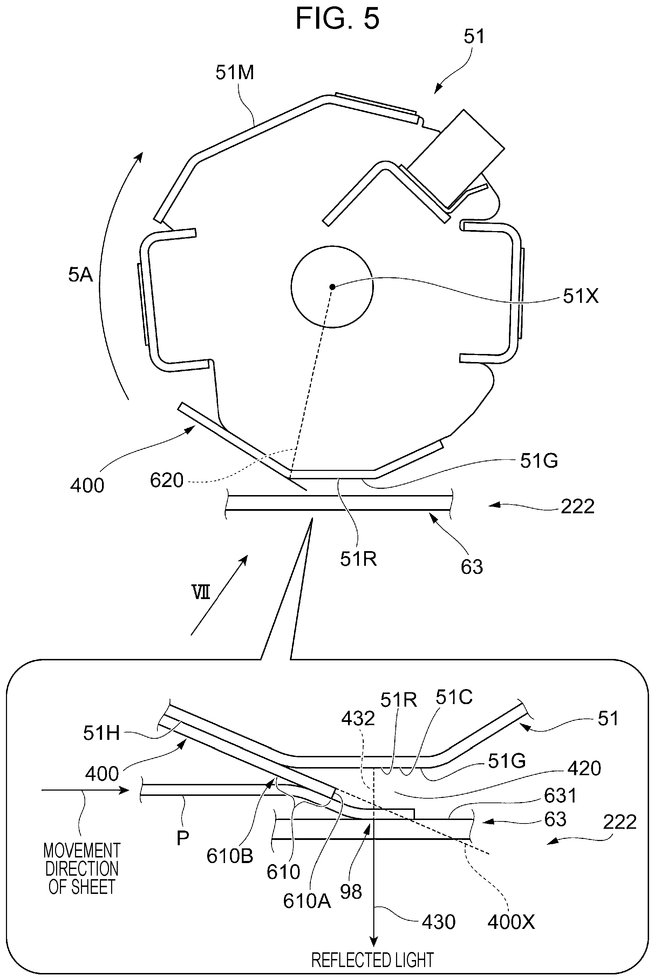

Fig. 5 is an enlarged view of the upper rotary body 51 and the light transmitting part 63.

In the exemplary embodiment, the upper rotary body 51 includes elastic bodies 400 that protrude toward the lower image reading part 222.

Each elastic body 400 is constituted by a plate-shaped member. Although the material of each elastic body 400 is not particularly limited, the material of each elastic body 400 may be, for example, a resin material.

In the exemplary embodiment, when a specific portion of the outer peripheral surface of the upper rotary body 51 is in a state of facing the lower image reading part 222, each elastic body 400 is brought into a state of protruding toward the lower image reading part 222.

In other words, in the exemplary embodiment, when a specific portion of the outer peripheral surface of the upper rotary body 51 is in the state of facing the lower image reading part 222, each elastic body 400 is brought into a state of being disposed so as to extend toward the lower image reading part 222.

More specifically, in the exemplary embodiment, when the reading guide surface 51G, which is provided as part of the outer peripheral surface of the upper rotary body 51, is in the state of facing the light transmitting part 63 of the lower image reading part 222, each elastic body 400 is brought into the state of protruding toward the lower image reading part 222. More specifically, each elastic body 400 is brought into a state of protruding toward the light transmitting part 63 of the lower image reading part 222.

In the exemplary embodiment, as described above, the separation distance between the transport guide surface 51M and the light transmitting part 63 is larger than the separation distance between the reading guide surface 51G and the light transmitting part 63.

In other words, in the exemplary embodiment, a separation distance between the rotational axis 51X of the upper rotary body 51 and the reading guide surface 51G is larger than a separation distance between the rotational axis 51X of the upper rotary body 51 and the transport guide surface 51M.

Fig. 5 shows a state in which the reading guide surface 51G, which is a planar surface 51C whose distance from the rotational axis 51X of the upper rotary body 51 is larger, faces the lower image reading part 222.

In the exemplary embodiment, when the reading guide surface 51G is in a state of facing the lower image reading part 222, each elastic body 400 protrudes toward the lower image reading part 222.

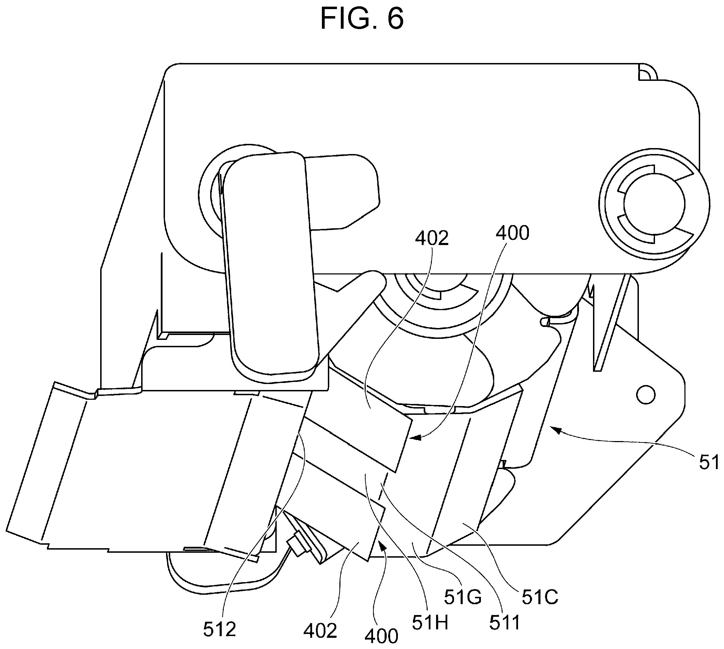

Fig. 6 illustrates a state when, for example, the upper rotary body 51 is seen from obliquely below the upper rotary body 51.

In the exemplary embodiment, as described above, as shown in Fig. 6, the outer peripheral surface of the upper rotary body 51 has multiple planar surfaces 51C whose positions in the peripheral direction of the upper rotary body 51 differ from each other.

Each elastic body 400 is attached to one planar surface 51C of the multiple planar surfaces 51C. Specifically, each elastic body 400 is attached to the upstream guide surface 51H.

In the exemplary embodiment, with one surface of each elastic body 400 and the upstream guide surface 51H being in surface-contact with each other, each elastic body 400 is attached to the upstream guide surface 51H.

In other words, in the exemplary embodiment, with the one surface of each elastic body 400 and the one planar surface 51C of the upper rotary body 51 being in surface-contact with each other, each elastic body 400 is attached to the one planar surface 51C.

Each elastic body 400 has a plate shape and has two surfaces, which are one surface and another surface 402, and, in the exemplary embodiment, with one of the two surfaces and the one planar surface 51C of the rotary body being in surface-contact with each other, each elastic body 400 is attached to the one planar surface 51C.

More specifically, in the exemplary embodiment, each elastic body 400 is attached to the one planar surface 51C of the rotary body with a double-sided adhesive tape (not shown) disposed between the one of the two surfaces of each elastic body 400 and the one planar surface 51C.

Note that, when each elastic body 400 is to be attached to the one planar surface 51C, for example, a fastening member, such as a screw, or an adhesive may be used instead of a double-sided tape.

Here, "with one of the two surfaces of each elastic body 400 and the one planar surface 51C of the rotary body being in surface-contact with each other" not only refers to a state in which one of the two surfaces of each elastic body 400 and the one planar surface 51C of the rotary body are in surface-contact with other, but also refers to a state in which one of the two surfaces of each elastic body 400 and the one planar surface 51C of the rotary body are in contact with each other through another member, such as the aforementioned double-sided tape, being interposed therebetween.

In the exemplary embodiment, when an image is to be read by the lower image reading part 222, as shown in Fig. 4, the reading guide surface 51G, which is one planar surface 51C of the multiple planar surfaces 51C of the outer peripheral surface of the upper rotary body 51, faces the lower image reading part 222.

Further, when an image is to be read by the lower image reading part 222, the upstream guide surface 51H, which is an example of another planar surface 51C, is positioned on the upstream side of the reading guide surface 51G in a movement direction of a sheet P.

As shown in Fig. 6, each elastic body 400 is supported by the upstream guide surface 51H of the upper rotary body 51. As shown in Fig. 5, each elastic body 400 protrudes toward the light transmitting part 63 of the lower image reading part 222 from a location where the upstream guide surface 51H is set.

As shown in Fig. 6, the upstream guide surface 51H has one end portion 511 and another end portion 512 whose positions in the peripheral direction of the upper rotary body 51 differ from each other.

The one end portion 511 is positioned on a near side of the reading guide surface 51G and the other end portion 512 is positioned on a far side of the reading guide surface 51G. The upstream guide surface 51H is provided so as to extend toward the one end portion 511 from the other end portion 512.

When an image is to be read by the lower image reading part 222 (not shown in Fig. 6), the light transmitting part 63 of the lower image reading part 222 is positioned on an extended surface 400X (see Fig. 5) of the upstream guide surface 51H extending toward the one end portion 511 from the other end portion 512.

As shown in Fig. 5, the light transmitting part 63 has a guide surface 631 that guides a sheet P that is transported. In the exemplary embodiment, the guide surface 631 (see Fig. 5) of the lower image reading part 222 is positioned on the extension surface 400X of the upstream guide surface 51H extending toward the one end portion 511 from the other end portion 512 (see Fig. 6).

In the exemplary embodiment, when an image on a sheet P is to be read by the lower image reading part 222, as shown in Fig. 5, the reading guide surface 51G, which is one planar surface 51C provided as part of the outer peripheral surface of the upper rotary body 51, is brought into the state of facing the lower image reading part 222.

In the exemplary embodiment, when the reading guide surface 51G is in the state of facing the lower image reading part 222, each elastic body 400 protrudes toward the lower image reading part 222.

In the exemplary embodiment, as shown in Fig. 5, each elastic body 400 is brought into a state of being positioned in a gap 420 between the reading guide surface 51G and the lower image reading part 222. More specifically, a leading end portion of each elastic body 400 is brought into the state of being positioned in the gap 420 between the reading guide surface 51G and the lower image reading part 222.

In the exemplary embodiment, as shown in Fig. 5, each elastic body 400 is disposed in a state of not contacting the lower image reading part 222, and is disposed with a gap between it and the lower image reading part 222.

More specifically, each elastic body 400 is disposed in a state of not contacting the light transmitting part 63 of the lower image reading part 222 and is disposed with a gap between it and the light transmitting part 63.

When each elastic body 400 is disposed with a gap between it and the light transmitting part 63, a load that acts upon a sheet P from each elastic body 400 is decreased when the sheet P passes each elastic body 400. In this case, jamming of the sheet P caused by the load acting upon the sheet P from each elastic body 400 is unlikely to occur.

Of surfaces of the light transmitting part 63, as mentioned above, a surface that faces the upper rotary body 51 functions as the guide surface 631 that guides a sheet P that is transported. The lower image reading part 222 has, at a location where the light transmitting part 63 is provided, the guide surface 631 that guides a sheet P that is transported.

The guide surface 631 is disposed at a position where the guide surface 631 faces the upper rotary body 51. The guide surface 631 is disposed so as to extend along the movement direction of a sheet P that is transported, contacts one of the surfaces of the sheet P, and guides the sheet P.

In the exemplary embodiment, as shown in Fig. 5, each elastic body 400 is disposed in a state of being inclined with respect to the guide surface 631. More specifically, each elastic body 400 is disposed so as to be gradually situated closer to the guide surface 631 as each elastic body 400 extends downstream in the movement direction of the sheet P.

In the exemplary embodiment, when a sheet P whose image is to be read by the lower image reading part 222 passes between the light transmitting part 63 of the lower image reading part 222 and the reading guide surface 51G of the upper rotary body 51, the sheet P is guided by each elastic body 400 and is urged toward the light transmitting part 63. In other words, the sheet P is guided by each elastic body 400 and moves toward the light transmitting part 63.

Therefore, the displacement of the sheet P in the thickness direction of the sheet P is decreased, and compared to a structure not including elastic bodies 400, the image reading by the lower image reading part 222 is stabilized.

Note that, although, in the exemplary embodiment, an example in which each elastic body 400 is disposed such that each elastic body 400 and the light transmitting part 63 do not contact each other is described, each elastic body 400 may be disposed such that each elastic body 400 and the light transmitting part 63 contact each other.

Further, in the exemplary embodiment, as shown in Fig. 5, each elastic body 400 is disposed at a location where each elastic body 400 is displaced from an extension line 432 of an optical axis 430 of reflected light propagating toward the light-receiving part 226 (see Fig. 1) from a sheet P.

In the exemplary embodiment, an image on a to-be-read portion 98 of a sheet P that is transported is read by the lower image reading part 222, the to-be-read portion 98 being a portion that is positioned where a predetermined reading location is situated.

In the exemplary embodiment, reflected light from the to-be-read portion 98, the reflected light being produced when light coming from the light sources 225 (see Fig. 1) illuminates a sheet P, propagates towards the light-receiving part 226. Therefore, an image on the to-be-read portion 98 of the sheet P is read by the lower image reading part 222.

In the exemplary embodiment, each elastic body 400 is provided at a location where each elastic body 400 is displaced from the extension line 432 of the optical axis 430 of the reflected light propagating toward the light-receiving part 226 from the to-be-read portion 98.

In the exemplary embodiment, each elastic body 400 is provided on an upstream side of the optical axis 430 in the movement direction of a sheet P that is transported. In other words, in the exemplary embodiment, when positions in the movement direction of a sheet P that is transported and that moves downstream are compared, each elastic body 400 is disposed on the upstream side of the optical axis 430.

Here, when each elastic body 400 is on the extension line 432 of the optical axis 430 of reflected light, each elastic body 400 is brought into a state of being positioned behind a sheet P and behind the to-be-read portion 98 of the sheet P.

In this case, each elastic body 400 may affect the reading of the to-be-read portion 98 by the lower image reading part 222 and may reduce the quality of a reading image obtained by the lower image reading part 222.

In contrast, as in the exemplary embodiment, when each elastic body 400 is provided at a location where each elastic body 400 is displaced from the extension line 432 of the optical axis 430, the effect of each elastic body 400 on the reading of the to-be-read portion 98 is reduced.

In the exemplary embodiment, when the upper rotary body 51 rotates from the state shown in Fig. 5, each elastic body 400 is brought into a state of being positioned at a location where each elastic body 400 is displaced from the gap 420.

More specifically, when the upper rotary body 51 rotates and the reading guide surface 51G is brought into a state of not facing the lower image reading part 222, each elastic body 400 is brought into the state of being positioned at the location where each elastic body 400 is displaced from the gap 420.

When the upper rotary body 51 rotates and, for example, the transport guide surface 51M is brought into the state of facing the lower image reading part 222, each elastic body 400 is brought into the state of being positioned at the location where each elastic body 400 is displaced from the gap 420.

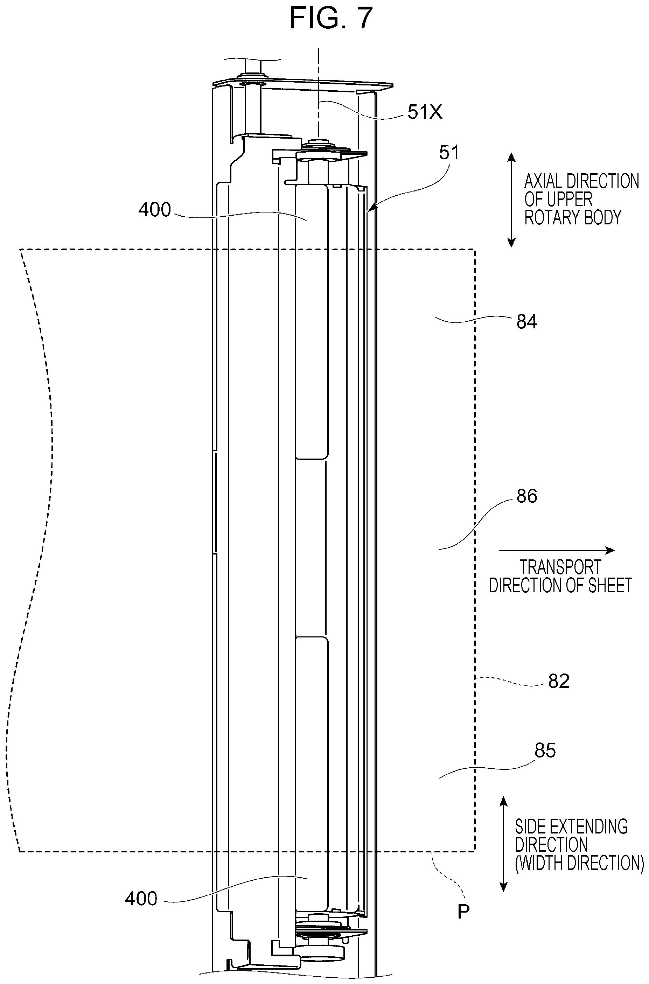

Fig. 7 illustrates a case when the upper rotary body 51 is seen from below the upper rotary body 51 and from a direction of arrow VII in Fig. 5. Note that Fig. 7 also shows a sheet P that is transported.

In the exemplary embodiment, each elastic body 400 is provided so as to extend in the axial direction of the upper rotary body 51.

Further, in the exemplary embodiment, the rotational axis 51X of the upper rotary body 51 extends along a side extending direction, which is a direction in which a leading end side 82, which is a side that is positioned at a leading end of a sheet P that is transported and that moves downstream, extends.

A sheet P in the exemplary embodiment has four sides that constitute a rectangle, and, in the exemplary embodiment, the rotational axis 51X of the upper rotary body 51 extends in the side extending direction, which is a direction in which the leading end side 82, which is one of the four sides, extends.

In the exemplary embodiment, each elastic body 400 is provided so as to extend in the axial direction of the upper rotary body 51.

In the exemplary embodiment, each elastic body 400 does not contact the entire region of a sheet P in the aforementioned side extending direction, and contacts part of the entire region.

In other words, if a width direction of a sheet P, which is a direction orthogonal to both of the movement direction of the sheet P and the thickness direction of the sheet P, is assumed, each elastic body 400 does not contact the entire region of the sheet P in the width direction, and contacts one end portion 84 and another end portion 85 of the sheet P in the width direction.

More specifically, each elastic body 400 contacts both of the one end portion 84 and the other end portion 85 of the sheet P in the side extending direction, and does not contact a central portion 86 of the sheet P in the side extending direction.

Note that a mode in which each elastic body 400 contacts the entire region of a sheet P in the side extending direction is not eliminated, and each elastic body 400 may contact the entire region of the sheet P in the side extending direction.

When, as in the exemplary embodiment, each elastic body 400 is configured to contact part of the entire region in the side extending direction of a sheet P, a load that acts upon the sheet P from each elastic body 400 is decreased and thus jamming of the sheet P is unlikely to occur.

Here, when a load that acts upon a sheet P from each elastic body 400 is large, the sheet P is unlikely to move and jamming of the sheet P may occur.

When, as in the exemplary embodiment, each elastic body 400 is configured to contact part of the entire region in the side extending direction of a sheet P, a load that acts upon the sheet P from each elastic body 400 is decreased and thus jamming of the sheet P is unlikely to occur.

In the exemplary embodiment, when an area of contact between a sheet P and each elastic body 400 is decreased, a load that acts upon the sheet P is decreased and thus jamming of the sheet P is unlikely to occur.

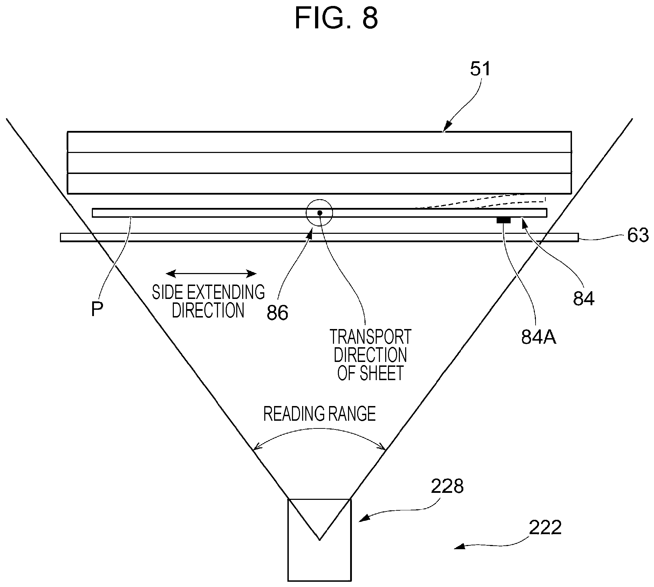

Fig. 8 illustrates a range of reading of an image by the lower image reading part 222.

In the exemplary embodiment, when, while a sheet P is passing a position where the sheet P faces the light transmitting part 63, an end portion of the sheet P in the side extending direction is displaced in the thickness direction of the sheet P, an image formed on the end portion moves in a main scanning direction on a reading image obtained by the reading by the lower image reading part 222.

In the exemplary embodiment, as shown in Fig. 1, an image-focusing optical system 228, such as a lens, is provided. In the exemplary embodiment, as shown in Fig. 8, an image of a sheet P, which is an object to be read that is positioned within the reading range that gradually widens from the image-focusing optical system 228, is read.

Here, when the one end portion 84 of the sheet P in the side extending direction is displaced in the thickness direction of the sheet P as shown by a broken line, an image 84A that is formed on the end portion is also displaced in the thickness direction of the sheet P.

In this case, on the reading image that is obtained by the reading by the lower image reading part 222, the image 84A moves in the main scanning direction and toward a central portion of the reading image.

In this case, even though the position of the image 84A with respect to the sheet P is not changed, the position of the image 84A is changed on the reading image. In this case, the quality of the reading image that is obtained by the lower image reading part 222 is reduced.

In the exemplary embodiment, as described above, the elastic bodies 400 contact the one end portion 84 and the other end portion 85 of a sheet P in the side extending direction. In this case, the one end portion 84 and the other end portion 85 of the sheet P are suppressed from being displaced in the thickness direction of the sheet P. Therefore, the above-described movement of the image 84A on the reading image is suppressed.

Note that the central portion 86 of a sheet P in the side extending direction is positioned in a central portion of the reading range. In this case, even if the central portion 86 moves in the thickness direction of the sheet P, an image formed on the central portion 86 does not move on the reading image, or the amount of movement of the image formed on the central portion 86 on the reading image is decreased.

Therefore, in the exemplary embodiment, in decreasing the area of contact between a sheet P and each elastic body 400 to decrease a load that acts upon the sheet P, a structure in which each elastic body 400 does not contact the central portion 86 of the sheet P in the side extending direction, the structure being a structure whose effect on the reading image is small, is used.

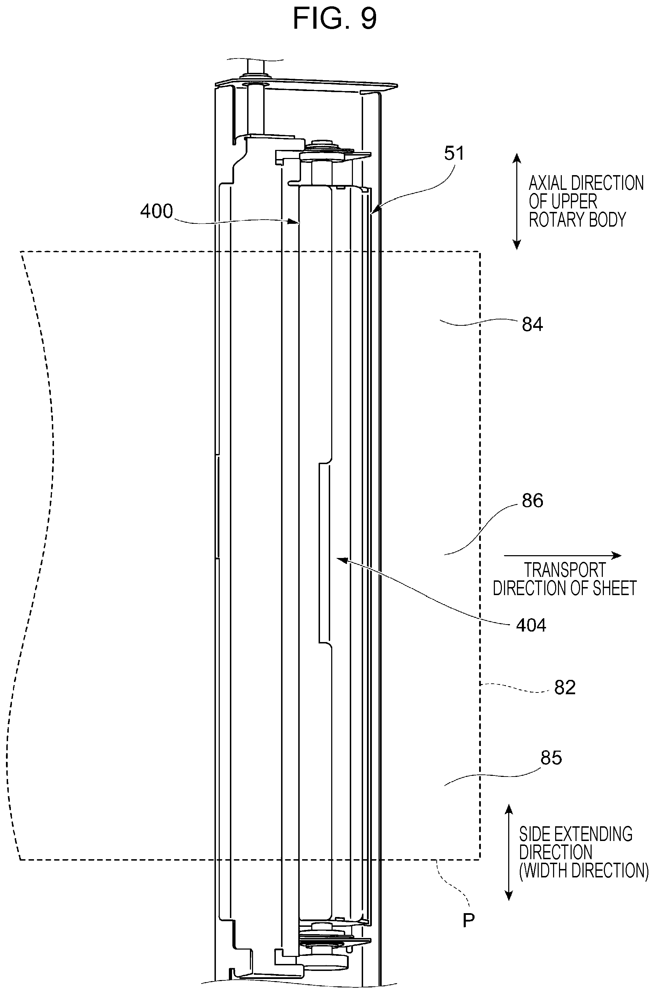

Fig. 9 illustrates a modification of an elastic body 400.

In the description above, as shown in Fig. 7, the case in which, by providing two elastic bodies 400, the elastic bodies 400 contact the one end portion 84 and the other end portion 85 of a sheet P in the side extending direction has been described.

In the modification shown in Fig. 9, with one elastic body 400 being provided, the elastic body 400 is configured to contact each of the one end portion 84 and the other end portion 85 of a sheet P in the side extending direction.

In the modification, the one elastic body 400 is configured to contact each of the one end portion 84 and the other end portion 85 of a sheet P in the side extending direction while causing the elastic body 400 to be out of contact with the central portion 86 of the sheet P in the side extending direction by providing a cutaway portion 404 in a central portion of the elastic body 400 in the longitudinal direction.

In the exemplary embodiment, as shown in Fig. 5, part of each elastic body 400 is in a state of protruding from the outer peripheral surface 51R of the upper rotary body 51, and, in the exemplary embodiment, a protruding portion 610 that protrudes from the outer peripheral surface 51R of the upper rotary body 51 is provided by the part of each elastic body 400.

Each protruding portion 610 has an end portion 610A that is positioned at a leading end in a protruding direction, and a base portion 610B that is positioned on a side where the outer peripheral surface 51R of the upper rotary body 51 is provided.

In the exemplary embodiment, each protruding portion 610 is inclined with respect to a straight line 620 extending toward the base portion 610B of each protruding portion 610 from the rotational axis 51X of the upper rotary body 51. The straight line 620 extends along a radial direction of the upper rotary body 51, and each protruding portion 610 is inclined with respect to the radial direction.

As a result of each protruding portion 610 being inclined in this way, in the exemplary embodiment, the position of each base portion 610B in the peripheral direction of the upper rotary body 51 and each end portion 610A in the peripheral direction of the upper rotary body 51 differ from each other.

In Fig. 5, the reading guide surface 51G of the upper rotary body 51 is in the state of facing the lower image reading part 222. In this state, each protruding portion 610 that is constituted by part of its corresponding elastic body 400 is brought into a state of being disposed at a position where each protruding portion 610 faces the lower image reading part 222.

In Fig. 5, each protruding portion 610 is disposed in a state of being inclined so as to be gradually situated closer to the light transmitting part 63 of the lower image reading part 222 as each protruding portion 610 extends downstream in the direction of transport of a sheet P.

In other words, in Fig. 5, each protruding portion 610 is disposed in the state of being inclined so as to be gradually situated closer to the guide surface 631 of the lower image reading part 222 as each protruding portion 610 extends downstream in the direction of transport of a sheet P.

Although not described above, in the exemplary embodiment, the upper rotary body 51 rotates in one direction, which is the direction of arrow 5A in the figure.

In the exemplary embodiment, when a portion of the upper rotary body 51 facing the lower image reading part 222 is switched to switch to another mode, the upper rotary body 51 is rotated in the one direction, which is the direction of the arrow 5A in the figure. In the exemplary embodiment, each base portion 610B is positioned on a downstream side of the corresponding end portion 610A in the rotation direction of the upper rotary body 51.

Note that, in the exemplary embodiment, as described below, the upper rotary body 51 not only rotates in this one direction, but also rotates in a direction opposite to this one direction as long as a predetermined condition is satisfied.

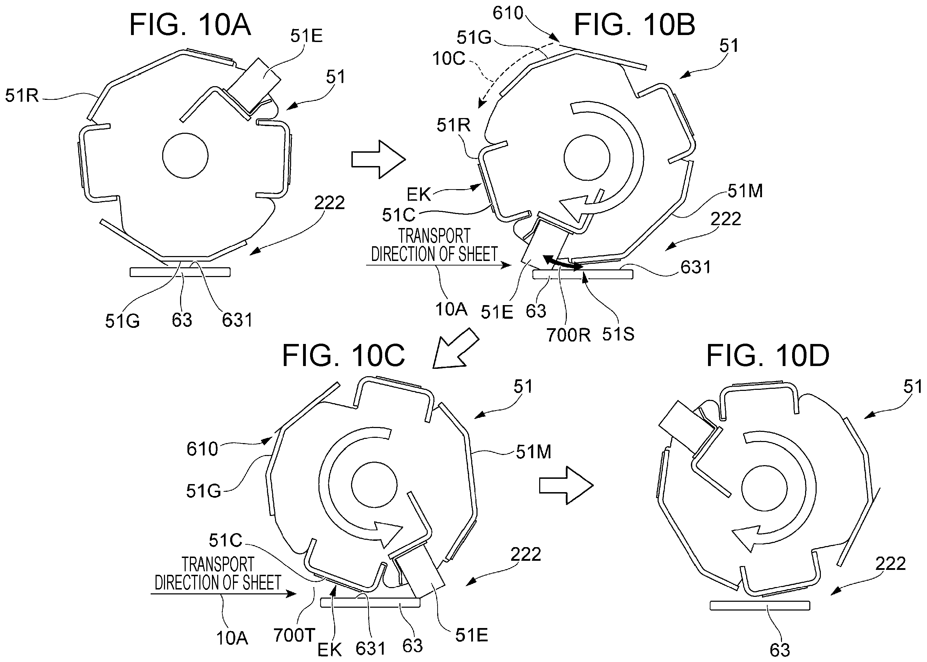

Figs. 10A to 10D are each an explanatory view of a rotation of the upper rotary body 51.

Fig. 10A shows a state that is the same as the state shown in Fig. 5.

In the exemplary embodiment, when the reading of an image on a sheet P by the lower image reading part 222 ends and the switching to another mode is performed, the upper rotary body 51 starts to rotate in a clockwise direction, which is the one direction, from the state shown in Fig. 10A.

Therefore, of the outer peripheral surface 51R of the upper rotary body 51, a location other than where the reading guide surface 51G is provided faces the light transmitting part 63 of the lower image reading part 222.

In other words, of the outer peripheral surface 51R of the upper rotary body 51, a location other than where the reading guide surface 51G is provided faces the guide surface 631 of the lower image reading part 222.

Note that, in the exemplary embodiment, the rotation of the upper rotary body 51 is controlled by the CPU 11a, which is an example of a processor, provided in the controller 240 (see Fig. 2).

In the exemplary embodiment, when the predetermined condition is satisfied, the upper rotary body 51 rotates in the opposite direction to the aforementioned one direction. Specifically, when the predetermined condition is satisfied, the upper rotary body 51 rotates in a counterclockwise direction.

More specifically, in the exemplary embodiment, for example, when the light transmitting part 63, which is a to-be-cleaned location, is cleaned by the cleaning member 51E, the upper rotary body 51 rotates in the direction opposite to the aforementioned one direction.

In the exemplary embodiment, the cleaning member 51E is provided at the outer peripheral surface 51R of the upper rotary body 51, and, when the light transmitting part 63 is to be cleaned by the cleaning member 51E, the upper rotary body 51 rotates in the opposite direction.

Figs. 10B and 10C each show the movement of the upper rotary body 51 when rotating in the opposite direction.

In the exemplary embodiment, when the upper rotary body 51 rotates in the opposite direction, the rotation in the opposite direction is started from a state in which the cleaning member 51E is positioned on the left side in the figure of the light transmitting part 63 (see Fig.10B).

In the exemplary embodiment, when the light transmitting part 63 is to be cleaned by the cleaning member 51E, the upper rotary body 51 rotates in the one direction until the cleaning member 51E is positioned on an upstream side of the light transmitting part 63 in the transport direction of a sheet P. Then, the upper rotary body 51 temporarily stops rotating.

Therefore, as shown in Fig. 5B, the cleaning member 51E is brought into a state of being positioned on the upstream side of the light transmitting part 63 in the transport direction of a sheet P.

Then, the upper rotary body 51 starts to rotate in the opposite direction.

When the upper rotary body 51 rotates in the opposite direction, as shown in Figs. 10B and 10C, the cleaning member 51E passes the light transmitting part 63, which is a to-be-cleaned location. In the exemplary embodiment, when the light transmitting part 63 is to be cleaned by the cleaning member 51E, in this way, the upper rotary body 51 rotates in the opposite direction to the one direction.

In the exemplary embodiment, as shown in Fig. 10B, when the upper rotary body 51 starts to rotate in the opposite direction, each protruding portion 610 is positioned at a location that is displaced from a position where each protruding portion 63 faces the light transmitting part 63.

Here, in Fig. 10B, of the outer peripheral surface 51R of the upper rotary body 51, a portion that is positioned at a location where the portion faces the light transmitting part 63, which is a to-be-cleaned location, is called a facing portion 51S.

In the exemplary embodiment, when the upper rotary body 51 starts to rotate in the opposite direction, as shown in Fig. 10B, each protruding portion 610 is positioned at a location of the outer peripheral surface 51R of the upper rotary body 51, the location being displaced from a region 700R between the location where the facing portion 51S is set and the location where the cleaning member 51E is set.

Therefore, when the cleaning member 51E moves toward the light transmitting part 63, each protruding portion 610 does not pass a location where each protruding portion 63 faces the light transmitting part 63.

Fig. 10C shows a state in which the rotation of the upper rotary body 51 in the opposite direction ends and the upper rotary body 51 has stopped. In the exemplary embodiment, after the upper rotary body 51 has been brought into the state shown in Fig. 10C, the upper rotary body 51 rotates again in the aforementioned one direction.

In the exemplary embodiment, the rotation angle of the upper rotary body 51 when the upper rotary body 51 rotates in the opposite direction is less than 360 degrees.

Therefore, as shown in Fig. 10C, the cleaning member 51E stops without moving up to an initial location 700T, which is a location where the cleaning member 51E was positioned when the rotation in the opposite direction started.

In the exemplary embodiment, although the rotation angle of the upper rotary body 51 in the aforementioned one direction is larger than 360 degrees, the rotation angle of the upper rotary body 51 when the upper rotary body 51 rotates in the opposite direction is less than 360 degrees.

In the exemplary embodiment, when the upper rotary body 51 rotates by an angle less than 360 degrees in the opposite direction, as shown in Figs. 10B and 10C, each protruding portion 610 does not pass a position where each protruding portion 610 faces the lower image reading part 222.

More specifically, each protruding portion 610 does not pass the position where each protruding portion 610 faces the light transmitting part 63 of the lower image reading part 222.

In the exemplary embodiment, when the upper rotary body 51 rotates by an angle less than 360 degrees in the opposite direction, as shown in Fig. 10C, each protruding portion 610 stops in front of the position where each protruding portion 610 faces the light transmitting part 63.

In the exemplary embodiment, when the upper rotary body 51 rotates in the opposite direction, the rotation of the upper rotary body 51 in the opposite direction ends before each protruding portion 610 reaches the position where each protruding portion 610 faces the light transmitting part 63.

In the exemplary embodiment, the rotation of the upper rotary body 51 in the opposite direction ends before each protruding portion 610 that moves as the upper rotary body 51 rotates in the opposite direction reaches the position where each protruding portion 610 faces the light transmitting part 63.

In the exemplary embodiment, in this way, each protruding portion 610 that moves as the upper rotary body 51 rotates in the opposite direction does not pass the position where each protruding portion 610 faces the light transmitting part 63. In other words, each protruding portion 610 does not pass a position where each protruding portion 610 faces the guide surface 631 of the lower image reading part 222.

Here, when each protruding portion 610 that moves as the upper rotary body 51 rotates in the opposite direction is configured so as not to pass the position where each protruding portion 610 faces the light transmitting part 63, each protruding portion 610 is unlikely to, for example, be damaged.

Although, in the exemplary embodiment, as described above, each elastic body 400 is disposed such that a gap is provided between it and the light transmitting part 63 and is configured such that each protruding portion 610 does not contact the light transmitting part 63, each protruding portion 610 may contact the light transmitting part 63 due to, for example, dimensional tolerance.

In addition, a mode in which each protruding portion 610 is long may also be considered, in which case each protruding portion 610 contacts the light transmitting part 63.

In this case, when, as in the exemplary embodiment, each protruding portion 610 is configured so as not to pass the position where each protruding portion 610 faces the light transmitting part 63, each protruding portion 610 is prevented from contacting the light transmitting part 63, and thus is unlikely to, for example, be damaged.

When the upper rotary body 51 rotates in the opposite direction, each protruding portion 610 moves with the end portion 610A being in the leading position with respect to the base portion 610B (see Fig. 5).

In this case, when each protruding portion 610 is configured so as to pass the position where each protruding portion 610 faces the light transmitting part 63, troubles tend to occur due to a load that acts upon each protruding portion 610 from the light transmitting part 63 or a load that acts upon each protruding portion 610 from the disposition member 64 (see Fig. 4) disposed around the light transmitting part 63.

Specifically, each protruding portion 610 may be damaged or each elastic body 400 that constitutes the corresponding protruding portion 610 may be separated from the upper rotary body 51.

In contrast, when, as in the exemplary embodiment, each protruding portion 610 is configured so as not to pass the position where each protruding portion 610 faces the light transmitting part 63, such troubles are unlikely to occur.

In the exemplary embodiment, when each elastic body 400 is disposed at a position where each elastic body 400 faces the light transmitting part 63, the upper rotary body 51 rotates in the aforementioned one direction. In the exemplary embodiment, when each elastic body 400 passes the light transmitting part 63 by passing the position where each elastic body 400 faces the light transmitting part 63, the upper rotary body 51 rotates in the one direction.

In the exemplary embodiment, when the upper rotary body 51 rotates in the opposite direction and the cleaning member 51E passes the light transmitting part 63, as shown in Figs. 10B and 10C, the cleaning member 51E moves downstream in the transport direction of a sheet P.

In Figs. 10B and 10C, the direction of arrow 10A indicates the direction of transport of a sheet P, and, in the exemplary embodiment, the cleaning member 51E moves downstream in the transport direction of the sheet P.

Here, when the cleaning member 51E is configured so as to move upstream in the transport direction of a sheet P, dust or the like that moves due to the cleaning by the cleaning member 51E moves upstream of the light transmitting part 63 in the transport direction of the sheet P.

In this case, due to a sheet P that is subsequently transported, the dust or the like may move toward the light transmitting part 63 and may re-adhere to the light transmitting part 63.

In contrast, when, as in the exemplary embodiment, the cleaning member 51E moves downstream in the transport direction of a sheet P, the dust or the like is unlikely to re-adhere to the light transmitting part 63.

In the exemplary embodiment, when cleaning is performed before an image on a sheet P is read by the lower image reading part 222, as described above, the cleaning member 51E moves downstream in the transport direction of the sheet P.

In this case, compared to a case in which an image is read through the light transmitting part 63 after being cleaned by the cleaning member 51E that has moved upstream in the transport direction of a sheet P, the quality of an obtained reading image is improved.

Further, in the exemplary embodiment, a member that contacts each protruding portion 610 is not provided beside a path through which each protruding portion 610 passes when the upper rotary body 51 rotates by an angle less than 360 degrees in the opposite direction.

In the exemplary embodiment, a path denoted by reference sign 10C in Fig. 10C is a path through which each protruding portion 610 passes when the upper rotary body 51 rotates by an angle less than 360 degrees in the opposite direction. In the exemplary embodiment, a member that contacts each protruding portion 610 is not provided beside this path.

When the upper rotary body 51 rotates in the opposite direction, as described above, each protruding portion 610 moves with the end portion 610A being in the leading position with respect to the base portion 610B.

In this case, when a member that contacts each protruding portion 610 exists beside the path through which each protruding portion 610 moves, each protruding portion 610 may be damaged or each elastic body 400 that constitutes the corresponding protruding portion 610 may be separated from the upper rotary body 51.

In contrast, when, as in the exemplary embodiment, a member that contacts each protruding portion 610 is not provided beside the path through which each protruding portion 610 moves, damage to each protruding portion 610 and separation of each elastic body 400 are suppressed.

Further, in the exemplary embodiment, as shown in Figs. 10B and 10C, the color calibration plate EK is provided on an upstream side of the cleaning member 51E in the rotation direction when the upper rotary body 51 rotates in the opposite direction.

More specifically, in the exemplary embodiment, the color calibration plate EK is provided with respect to the planar surface 51C, which is disposed at a first upstream-side position with respect to the cleaning member 51E in the rotation direction when the upper rotary body 51 rotates in the opposite direction.

In the exemplary embodiment, as described above, the upper rotary body 51 has multiple planar surfaces 51C.

In the exemplary embodiment, the color calibration plate EK is attached to, of the multiple planar surfaces 51C that are positioned on the upstream side of the cleaning member 51E in the rotation direction when the upper rotary body 51 rotates in the opposite direction, the planar surface 51C that is positioned closest to the cleaning member 51E.

In other words, in the exemplary embodiment, the color calibration plate EK is attached to, of the multiple planar surfaces 51C that are positioned on the upstream side of the cleaning member 51E in the rotation direction when the upper rotary body 51 rotates in the opposite direction, the planar surface 51C that is positioned on the most downstream side in the rotation direction.

In the exemplary embodiment, when the color calibration plate EK is to be read, first, as shown in Fig. 10B, the color calibration plate EK and the cleaning member 51E are both temporarily moved to the upstream side of the light transmitting part 63 in the transport direction of a sheet P.

Then, the upper rotary body 51 rotates in the opposite direction to move the color calibration plate EK to a position where the color calibration plate EK faces the light transmitting part 63.

In the structure of the exemplary embodiment, just before the color calibration plate EK reaches the position where the color calibration plate EK faces the light transmitting part 63, the light transmitting part 63 is cleaned by the cleaning member 51E. In other words, in the exemplary embodiment, just after the light transmitting part 63 is cleaned by the cleaning member 51E, the color calibration plate EK reaches the position where the color calibration plate EK faces the light transmitting part 63.

Therefore, during the time until the color calibration plate EK reaches the position where the color calibration plate EK faces the light transmitting part 63 after the light transmitting part 63 has been cleaned, dust or the like is unlikely to adhere to the light transmitting part 63.

Note that, in the exemplary embodiment, when the color calibration plate EK moves to the position where the color calibration plate EK faces the light transmitting part 63, as described above, each protruding portion 610 stops in front of the position where each protruding portion 610 faces the light transmitting part 63 without reaching the position where each protruding portion 610 faces the light transmitting part 63.

In the exemplary embodiment, even when the color calibration plate EK is to be read, the rotation angle of the upper rotary body 51 in the opposite direction is less than 360 degrees. Therefore, each protruding portion 610 is prevented from passing the position where each protruding portion 610 faces the light transmitting part 63.

In the exemplary embodiment, as shown in Fig. 10B, the reading guide surface 51G and the transport guide surface 51M are not positioned between the cleaning member 51E and the color calibration plate EK in the peripheral direction of the upper rotary body 51.

The reading guide surface 51G and the transport guide surface 51M function as facing portions, and are disposed so as to face the lower image reading part 222 when a sheet P passes between the upper rotary body 51 and the lower image reading part 222. In the exemplary embodiment, these facing portions are not provided between the cleaning member 51E and the color calibration plate EK in the peripheral direction of the upper rotary body 51.

When the reading guide surface 51G or the transport guide surface 51M is positioned between the cleaning member 51E and the color calibration plate EK, the reading guide surface 51G or the transport guide surface 51M passes a position where it faces the transmitting part 63 after cleaning the light transmitting part 63 by the cleaning member 51E.

In this case, an adhering substance adhered to the reading guide surface 51G or the transport guide surface 51M may fall and soil the light transmitting part 63. In addition, in this case, afterwards, the color calibration plate EK is positioned at a position where the color calibration plate EK faces the light transmitting part 63 to which dirt is adhered.

In the exemplary embodiment, fiber constituting a sheet P adheres to the reading guide surface 51G or the transport guide surface 51M, and toner constituting an image formed on the sheet P adheres to the reading guide surface 51G or the transport guide surface 51M.

In the exemplary embodiment, as described above, images may be formed on both surfaces of a sheet P, in which case, toner constituting the image formed on a surface of the sheet P facing the reading guide surface 51G or the transport guide surface 51M adheres to the reading guide surface 51G or the transport guide surface 51M.

In addition, as described above, the fiber constituting the sheet P adheres to the reading guide surface 51G or the transport guide surface 51M.

In this case, when the reading guide surface 51G or the transport guide surface 51M is positioned between the cleaning member 51E and the color calibration plate EK, an adhering substance adhered to the reading guide surface 51G or the transport guide surface 51M may fall on the light transmitting part 63 after cleaning the light transmitting part 63 by the cleaning member 51E.

When an adhering substance adhered to the reading guide surface 51G or the transport guide surface 51M falls on the light transmitting part 63, the color calibration plate EK is positioned at the position where the color calibration plate EK faces the light transmitting part 63 to which dirt is adhered.

In contrast, in the exemplary embodiment, as described above, the reading guide surface 51G and the transport guide surface 51M are not positioned between the cleaning member 51E and the color calibration plate EK in the peripheral direction of the upper rotary body 51.

Therefore, in the exemplary embodiment, after cleaning the light transmitting part 63, the light transmitting part 63 is suppressed from being soiled, and the color calibration plate EK is unlikely to be read through the light transmitting part 63 in the soiled state.

Here, a best mode is, as described above, a mode in which the color calibration plate EK is provided with respect to, of the multiple planar surfaces 51C that are positioned on the upstream side of the cleaning member 51E in the rotation direction when the upper rotary body 51 rotates in the opposite direction, the planar surface 51C that is positioned closest to the cleaning member 51E.

In this case, compared to when the color calibration plate EK is provided with respect to, of the multiple planar surfaces 51C that are positioned on the upstream side of the cleaning member 51E, a planar surface 51C that is positioned far from the planar surface 51C that is positioned closest to the cleaning member 51E, the number of falling objects is decreased.

Note that, in the exemplary embodiment, after the color calibration plate EK has moved to the position where the color calibration plate EK faces the light transmitting part 63, the rotation of the upper rotary body 51 in the opposite direction ends. When the reading of the color calibration plate EK by the lower image reading part 222 ends, the upper rotary body 51 rotates in the one direction.

The foregoing description of the exemplary embodiment of the present disclosure has been provided for the purposes of illustration and description. It is not intended to be exhaustive or to limit the disclosure to the precise forms disclosed. Obviously, many modifications and variations will be apparent to practitioners skilled in the art. The embodiment was chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims.

## Claims

1. An image reading device (200) comprising:
transporting means (213) for transporting a recording medium (P) along a transport path (R);
image reading means (222), disposed on one side of the transport path, for reading an image formed on the recording medium that is transported through the transport path; and
a rotary body (51) that is rotatably provided, that is disposed on a side opposite to a side where the image reading means is set with the transport path being interposed between the rotary body and the image reading means, and that includes an elastic body (400) that protrudes toward the image reading means,
**characterized in that**:
when the image is to be read by the image reading means, one planar surface provided as part of an outer peripheral surface of the rotary body faces the image reading means, and
wherein, when the one planar surface is in a state of facing the image reading means, the elastic body protrudes toward the image reading means and the elastic body is brought into a state of being positioned in a gap (420) between the one planar surface and the image reading means.

2. The image reading device according to claim 1, wherein an outer peripheral surface of the rotary body has a plurality of planar surfaces whose positions in a peripheral direction of the rotary body differ from each other, and
wherein the elastic body is attached to one planar surface of the plurality of planar surfaces.

3. The image reading device according to claim 2, wherein the elastic body has a plate shape, and
wherein, with one surface of the elastic body and the one planar surface of the rotary body being in surface-contact with each other, the elastic body is attached to the one planar surface.

4. The image reading device according to claim 1, wherein, when the rotary body rotates and the one planar surface is brought into a state of not facing the image reading means, the elastic body is brought into a state of being positioned at a location where the elastic body is displaced from the gap.

5. The image reading device according to claim 1, wherein the image reading means has a guide surface that is disposed at a position where the guide surface faces the rotary body, that extends along a movement direction of the recording medium that is transported, and that guides the recording medium, and
wherein the elastic body is disposed in a state of being inclined with respect to the guide surface.

6. The image reading device according to claim 1, wherein the image reading device is configured to rotate the rotary body in a first direction and wherein a cleaning member (51E) that cleans a to-be-cleaned location of the image reading means is provided at the outer peripheral surface of the rotary body, and
wherein, when the to-be-cleaned location is to be cleaned by the cleaning member, the rotary body rotates in a second direction opposite to the first direction.

7. The image reading device according to claim 6, wherein a rotation angle of the rotary body when the rotary body rotates in the second direction is less than 360 degrees.

8. The image reading device according to claim 6,
wherein, when the to-be-cleaned location is to be cleaned by the cleaning member, the image reading device is configured to rotate the rotary body in the second direction such that the cleaning member passes the to-be-cleaned location, and
wherein, when the rotary body rotates in the second direction, the image reading device is configured such that the rotary body finishes rotating in the second direction before the elastic body reaches a position where the elastic body faces the to-be-cleaned location.

9. The image reading device according to claim 8, wherein, when the rotary body rotates in the second direction and the cleaning member passes the to-be-cleaned location, the cleaning member moves downstream in a direction of transport of the recording medium by the transporting means.

## Patentansprüche

1. Bildlesevorrichtung (200), umfassend:
Transportmittel (213) zum Transportieren eines Aufzeichnungsmediums (P) entlang eines Transportwegs (R);
Bildlesemittel (222), das auf einer Seite des Transportwegs angeordnet ist, zum Lesen eines Bildes, das auf dem Aufzeichnungsmedium gebildet ist, das durch den Transportweg transportiert wird; und
einen Drehkörper (51), der drehbar vorgesehen ist, der auf einer Seite gegenüber einer Seite angeordnet ist, auf der das Bildlesemittel gestellt ist, wobei der Transportweg zwischen dem Drehkörper und dem Bildlesemittel eingefügt ist, und der einen elastischen Körper (400) enthält, der zu dem Bildlesemittel hin vorsteht,
**dadurch gekennzeichnet, dass**:
wenn das Bild von dem Bildlesemittel gelesen werden soll, eine Planaroberfläche, die als Teil einer Außenumfangsfläche des Drehkörpers vorgesehen ist, dem Bildlesemittel zugewandt ist, und
wobei, wenn sich die eine Planaroberfläche in einem Zustand des Zugewandtseins zu dem Bildlesemittel befindet, der elastische Körper zu dem Bildlesemittel hin vorsteht und der elastische Körper in einen Zustand gebracht wird, in dem er in einem Spalt (420) zwischen der einen Planaroberfläche und dem Bildlesemittel positioniert ist.

2. Bildlesevorrichtung nach Anspruch 1, wobei eine Außenumfangsfläche des Drehkörpers mehrere Planaroberflächen aufweist, deren Positionen in einer Umfangsrichtung des Drehkörpers sich voneinander unterscheiden, und
wobei der elastische Körper an einer Planaroberfläche der mehreren Planaroberflächen angebracht ist.

3. Bildlesevorrichtung nach Anspruch 2, wobei der elastische Körper eine Plattenform aufweist, und
wobei, wenn eine Oberfläche des elastischen Körpers und die eine Planaroberfläche des Drehkörpers in Oberflächenkontakt miteinander sind, der elastische Körper an der einen Planaroberfläche angebracht ist.

4. Bildlesevorrichtung nach Anspruch 1, wobei, wenn sich der Drehkörper dreht und die eine Planaroberfläche in einen Zustand gebracht wird, in dem sie dem Bildlesemittel nicht zugewandt ist, der elastische Körper in einen Zustand gebracht wird, in dem er an einer Stelle positioniert ist, an der der elastische Körper von dem Spalt verschoben ist.

5. Bildlesevorrichtung nach Anspruch 1, wobei das Bildlesemittel eine Führungsfläche aufweist, die an einer Position angeordnet ist, an der die Führungsfläche dem Drehkörper zugewandt ist, die sich entlang einer Bewegungsrichtung des Aufzeichnungsmediums, das transportiert wird, erstreckt und die das Aufzeichnungsmedium führt, und
wobei der elastische Körper in einem Zustand angeordnet ist, in dem er in Bezug auf die Führungsfläche geneigt ist.

6. Bildlesevorrichtung nach Anspruch 1, wobei die Bildlesevorrichtung so konfiguriert ist, dass sie den Drehkörper in einer ersten Richtung dreht und wobei ein Reinigungselement (51E), das eine zu reinigende Stelle des Bildlesemittels reinigt, an der Außenumfangsfläche des Drehkörpers vorgesehen ist, und
wobei, wenn die zu reinigende Stelle durch das Reinigungselement gereinigt werden soll, sich der Drehkörper in einer zweiten Richtung, die der ersten Richtung entgegengesetzt ist, dreht.

7. Bildlesevorrichtung nach Anspruch 6, wobei ein Drehwinkel des Drehkörpers, wenn sich der Drehkörper in der zweiten Richtung dreht, kleiner als 360 Grad ist.

8. Bildlesevorrichtung nach Anspruch 6,
wobei, wenn die zu reinigende Stelle durch das Reinigungselement gereinigt werden soll, die Bildlesevorrichtung so konfiguriert ist, dass sie den Drehkörper in der zweiten Richtung so dreht, dass das Reinigungselement die zu reinigende Stelle passiert, und
wobei, wenn sich der Drehkörper in der zweiten Richtung dreht, die Bildlesevorrichtung so konfiguriert ist, dass der Drehkörper Drehen in der zweiten Richtung beendet, bevor der elastische Körper eine Position erreicht, in der der elastische Körper der zu reinigenden Stelle zugewandt ist.

9. Bildlesevorrichtung nach Anspruch 8, wobei, wenn sich der Drehkörper in der zweiten Richtung dreht und das Reinigungselement die zu reinigende Stelle passiert, sich das Reinigungselement stromabwärts in einer Richtung von Transport des Aufzeichnungsmediums durch das Transportmittel bewegt.

## Revendications

1. Dispositif de lecture d'images (200) comprenant :
un moyen de transport (213) pour transporter un support d'enregistrement (P) le long d'un chemin de transport (R) ;
un moyen de lecture d'images (222), disposé sur un côté du chemin de transport, pour lire une image formée sur le support d'enregistrement qui est transporté à travers le chemin de transport ; et
un corps rotatif (51) qui est prévu de manière rotative, qui est disposé sur un côté opposé à un côté où le moyen de lecture d'images est disposé, le chemin de transport étant interposé entre le corps rotatif et le moyen de lecture d'images, et qui inclut un corps élastique (400) qui fait saillie vers le moyen de lecture d'images,
**caractérisé en ce que** :
lorsque l'image doit être lue par le moyen de lecture d'images, une surface plane prévue comme partie d'une surface périphérique externe du corps rotatif fait face au moyen de lecture d'images, et
dans lequel, lorsque l'une surface plane est dans un état faisant face au moyen de lecture d'images, le corps élastique fait saillie vers le moyen de lecture d'images et le corps élastique est amené dans un état où il est positionné dans un espace (420) entre l'une surface plane et le moyen de lecture d'images.

2. Dispositif de lecture d'images selon la revendication 1, dans lequel une surface périphérique externe du corps rotatif a une pluralité de surfaces planes dont les positions dans une direction périphérique du corps rotatif diffèrent les unes des autres, et
dans lequel le corps élastique est fixé à une surface plane de la pluralité de surfaces planes.

3. Dispositif de lecture d'images selon la revendication 2, dans lequel le corps élastique a une forme de plaque, et
dans lequel, une surface du corps élastique et l'une surface plane du corps rotatif étant en contact de surface l'une avec l'autre, le corps élastique est fixé à l'une surface plane.

4. Dispositif de lecture d'images selon la revendication 1, dans lequel, lorsque le corps rotatif tourne et que l'une surface plane est amenée dans un état où elle ne fait pas face au moyen de lecture d'images, le corps élastique est amené dans un état où il est positionné à un emplacement où le corps élastique est déplacé de l'espace.

5. Dispositif de lecture d'images selon la revendication 1, dans lequel le moyen de lecture d'images a une surface de guidage qui est disposée à une position où la surface de guidage fait face au corps rotatif, qui s'étend le long d'une direction de déplacement du support d'enregistrement qui est transporté, et qui guide le support d'enregistrement, et
dans lequel le corps élastique est disposé dans un état de manière à être incliné par rapport à la surface de guidage.

6. Dispositif de lecture d'images selon la revendication 1, dans lequel le dispositif de lecture d'images est configuré pour faire tourner le corps rotatif dans une première direction et dans lequel un élément de nettoyage (51E) qui nettoie un emplacement à nettoyer du moyen de lecture d'images est prévu sur la surface périphérique externe du corps rotatif, et
dans lequel, lorsque l'emplacement à nettoyer doit être nettoyé par l'élément de nettoyage, le corps rotatif tourne dans une deuxième direction opposée à la première direction.

7. Dispositif de lecture d'images selon la revendication 6, dans lequel un angle de rotation du corps rotatif lorsque le corps rotatif tourne dans la deuxième direction est inférieur à 360 degrés.

8. Dispositif de lecture d'images selon la revendication 6,
dans lequel, lorsque l'emplacement à nettoyer doit être nettoyé par l'élément de nettoyage, le dispositif de lecture d'images est configuré pour faire tourner le corps rotatif dans la deuxième direction de sorte que l'élément de nettoyage passe au niveau de l'emplacement à nettoyer, et
dans lequel, lorsque le corps rotatif tourne dans la deuxième direction, le dispositif de lecture d'images est configuré de sorte que le corps rotatif termine sa rotation dans la deuxième direction avant que le corps élastique n'atteigne une position où le corps élastique fait face à l'emplacement à nettoyer.

9. Dispositif de lecture d'images selon la revendication 8, dans lequel, lorsque le corps rotatif tourne dans la deuxième direction et que l'élément de nettoyage passe au niveau de l'emplacement à nettoyer, l'élément de nettoyage se déplace en aval dans une direction de transport du support d'enregistrement par le moyen de transport.
